# EUROPÄISCHE PATENTANMELDUNG

(11) **EP 1 270 923 A2**
(43) Veröffentlichungstag der Anmeldung: **02.01.2003**
(21) Anmeldenummer: 02013217.1
(22) Anmeldetag: 15.06.2002
(51) Int. Cl.: F02M 27/04, F02M 29/14, F02M 17/18

(54) **Vorrichtung zur Aufbereitung von Brennstoffen**

(30) Priorität: 21.06.2001 DE 10130102
(71) Anmelder: Kiener, Ludwig, 72622 Nürtingen (DE)
(72) Erfinder: Kiener, Ludwig, 72622 Nürtingen (DE)
(74) Vertreter: Ruckh, Rainer Gerhard, Dr.

(57) **Zusammenfassung**

Die Erfindung betrifft eine Vorrichtung (1) zur Aufbereitung von Brennstoffen mit einer Brennstoff-Zuführeinrichtung zur Einleitung von Brennstoff in wenigstens einen Brennstoff-Aufbereitungsraum und mit einer Luftzuführeinrichtung zum Einleiten von Luft in den Brennstoff-Aufbereitungsraum. Im Brennstoff-Aufbereitungsraum sind Mittel zur Erzeugung eines Brennstoff-Luft-Gemisches vorgesehen. Weiterhin weist die Vorrichtung einen Austrittskanal (14) zur Zuführung des Brennstoff-Luft-Gemisches zu einem Verbrennungsmotor und/oder einer Feuerungseinheit auf.

## Beschreibung

Die Erfindung betrifft eine Vorrichtung zur Aufbereitung von Brennstoffen.

Die Brennstoffe sind typischerweise von Diesel-, Benzin- oder Leichtölkraftstoffen gebildet, die zum Betrieb von Diesel-, Benzin- und Leichtölmotoren dienen. Dabei werden Benzin- und Dieselmotoren insbesondere in Kraftfahrzeugen aller Art eingesetzt. Weiterhin können die Brennstoffe zum Betrieb von Feuerungseinheiten wie zum Beispiel Heizungsanlagen verwendet werden.

Generell besteht bei dem Betrieb derartiger Verbrennungsmotoren und Feuerungseinheiten eine wesentliche Aufgabe darin, eine möglichst effiziente und vollständige Verbrennung der Brennstoffe zu erzielen. Durch eine vollständige Verbrennung ergibt sich ein hoher Wirkungsgrad, das heißt bei geringem Brennstoffverbrauch wird dennoch eine hohe Leistung erhalten.

Weiterhin ist eine vollständige Verbrennung des Brennstoffs deshalb wünschenswert, da in diesem Fall in den Abgasen wenig Rußpartikel enthalten sind.

Das Problem der Emission von Rußpartikeln ist insbesondere bei in Kraftfahrzeugen eingesetzten Dieselmotoren gravierend. Dort müssen zur Einhaltung von Normen zur Emission von Schadstoffen Abgasrückführsysteme oder Rußfilter eingesetzt werden, damit die Emission von Rußpartikeln die vorgeschriebenen Grenzwerte nicht überschreiten. Eine derartige Nachbehandlung der Abgase von Verbrennungsmotoren bedeutet einen erheblichen Konstruktions- und Kostenaufwand.

Der Erfindung liegt die Aufgabe zugrunde, die Verbrennung von Brennstoffen in Verbrennungsmotoren und Feuerungseinheiten zu verbessern.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung zur Aufbereitung von Brennstoffen weist eine Brennstoff-Zuführeinrichtung zur Einleitung von Brennstoff in wenigstens einen Brennstoff-Aufbereitungsraum und eine Luftzuführeinrichtung zum Einleiten von Luft in den Brennstoff-Aufbereitungsraum auf. Im Brennstoff-Aufbereitungsraum sind Mittel zur Erzeugung eines Brennstoff-Luft-Gemisches vorgesehen. Zudem ist ein Austrittskanal für die Zuführung des Brennstoff-Luft-Gemisches zu einem Verbrennungsmotor oder einer Feuerungseinheit vorgesehen.

Die erfindungsgemäße Vorrichtung bildet ein Modul, welches herkömmlichen Verbrennungsmotoren vorgeschaltet wird, wobei an den Verbrennungsmotoren selbst keinerlei konstruktive Veränderungen vorgenommen werden müssen.

Die erfindungsgemäße Vorrichtung weist somit eine universelle Schnittstelle auf und kann für Verbrennungsmotoren aller Art, insbesondere Dieselmotoren, Benzinmotoren und Leichtölmotoren eingesetzt werden.

Ebenso kann die erfindungsgemäße Vorrichtung in Feuerungseinheiten wie zum Beispiel Heizungsanlagen eingesetzt werden. Die Vorrichtung ist dann typischerweise einer Ölfeuerungsanlage vorgeordnet.

Im Gegensatz zu herkömmlich betriebenen Verbrennungsmotoren oder Feuerungseinheiten wird diesen der jeweilige Brennstoff nicht unmittelbar und in flüssiger Form über Zuleitungen oder dergleichen zugeführt.

Vielmehr wird in der erfindungsgemäßen Vorrichtung ein Brennstoff-Luft-Gemisch erzeugt. Durch eine geeignete Ausbildung der Brennstoff-Zuführeinrichtung und der Luftzuführeinrichtung und insbesondere des Brennstoff-Aufbereitungsraums wird eine intensive Durchmischung des Brennstoffs mit der zugeführten Luft erzielt. Das Brennstoff-Luft-Gemisch weist dabei die Konsistenz eines fein verteilten Schaumes auf und wird in dieser Form dem Verbrennungsmotor oder der Feuerungseinheit zugeführt.

Überraschenderweise werden durch diese Aufbereitung des Brennstoffes signifikant bessere Verbrennungswerte erhalten. Dabei wird die Emission von Rußpartikeln, insbesondere bei Dieselmotoren, drastisch gesenkt.

In einer vorteilhaften Ausführungsform der Erfindung wird dabei das Brennstoff-Luft-Gemisch in dem Brennstoff-Aufbereitungsraum mit magnetischen Feldern und/oder mechanischen Schwingungen beaufschlagt. Für derartig weitergebildete Vorrichtungen werden weiter verbesserte Verbrennungswerte und Rußemissionswerte in den nachgeordneten Einheiten erhalten.

In einer weiteren vorteilhaften Ausführungsform der Erfindung wird das Brennstoff-Luft-Gemisch vor der Einleitung in den Verbrennungsmotor oder in die Feuerungseinheit aufgeheizt. Besonders bevorzugt erfolgt die Aufheizung im Bereich des dem Brennstoff-Aufbereitungsraum nachgeordneten Austrittskanals.

Die Erfindung wird im nachstehenden anhand der Zeichnung erläutert. Es zeigt:

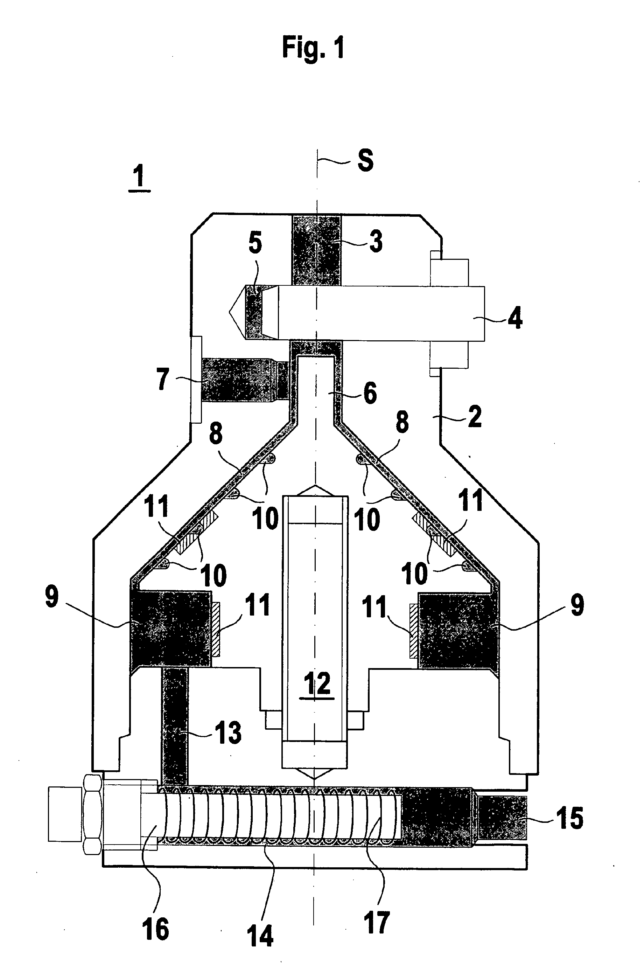

- Figur 1:: Längsschnitt durch ein Ausführungsbeispiel der erfindungsgemäßen Vorrichtung zur Aufbereitung von Brennstoffen.

Figur 1 zeigt ein Ausführungsbeispiel der erfindungsgemäßen Vorrichtung 1 zur Aufbereitung von Brennstoffen. Die Vorrichtung 1 ist als Modul ausgebildet und als solches herkömmlichen Verbrennungsmotoren oder Feuerungseinheiten vorschaltbar, ohne dass an diesen konstruktive Veränderungen vorgenommen werden müssen.

Die nicht dargestellten Verbrennungsmotoren können insbesondere von Diesel-, Benzin- und Leichtölmotoren gebildet sein, die je nach Ausführungsform in Kraftfahrzeugen und dergleichen eingesetzt werden. Die Feuerungseinheiten sind insbesondere von Heizungsanlagen gebildet. Dabei können diese insbesondere von Ölfeuerungsanlagen gebildet sein, wobei diese ein Zerstäubungsgerät aufweisen, welchem die Vorrichtung 1 vorgeschaltet wird. Die Brennstoffe können je nach Anwendungsfall von leichtem Heizöl, Leichtöl und Diesel-oder Benzinkraftstoffen gebildet sein.

Die in Figur 1 dargestellte Vorrichtung 1 weist einen massiven Grundkörper 2 auf, der von einem Frästeil aus Stahl, einem Druckgussteil oder dergleichen gebildet ist.

Die Vorrichtung 1 weist eine Brennstoff-Zuführeinrichtung auf, über welche der aufzubereitende Brennstoff in den Grundkörper 2 eingeleitet wird. Zudem ist eine Luftzuführeinrichtung vorgesehen, welche zur Einleitung von Luft in den Grundkörper 2 dient.

Die Luftzuführeinrichtung weist einen in vertikaler Richtung verlaufenden hohlzylindrischen Kanal 3 auf. Der Kanal 3 ist als Bohrung im Grundkörper 2 ausgebildet und verläuft in dem zylindrisch ausgebildeten Oberteil des Grundkörpers 2 entlang dessen Symmetrieachse S, wobei die Bohrung selbst rotationssymmetrisch bezüglich der Symmetrieachse S ausgebildet ist. Der Kanal 3 mündet am oberen Ende des Grundkörpers 2 aus. Über diese Öffnung wird Luft in den Kanal 3 eingeleitet, wobei hierfür vorzugsweise Druckluft mit einem vorgegebenen Druck eingeleitet wird. Die so eingeleitete Luft strömt innerhalb des Kanals 3 abwärts.

Zur Dosierung der Luftzufuhr können insbesondere Ventile, Drosselklappen oder dergleichen vorgesehen sein. Im vorliegenden Ausführungsbeispiel erfolgt die Dosierung der Luftzufuhr über einen Schieber 4. Der Schieber 4 ist in einem in horizontaler Richtung verlaufenden Führungskanal 5 in dessen Längsrichtung verschiebbar angeordnet. Der Führungskanal 5 ist als Bohrung in den Grundkörper 2 eingearbeitet und durchsetzt den in vertikaler Richtung verlaufenden Kanal 3. Durch Einschieben des Schiebers 4 ist wie in Figur 1 dargestellt ein Teil des Querschnitts des Kanals 3 durch diesen Schieber 4 blockiert, wodurch je nach Schieberstellung nur ein bestimmter Teil der im Kanal 3 geführten Luft den Schieber 4 passieren kann.

Der Führungskanal 5 weist einen kreisförmigen konstanten Querschnitt auf. Der Schieber 4 ist im Wesentlichen zylindrisch ausgebildet, wobei dessen Auβendurchmesser dem Innendurchmesser des Führungskanals 5 entspricht.

Die den Schieber 4 umströmende Luft passiert den unteren Teil des Kanals 3, dessen unterer Rand in einen Brennstoff-Aufbereitungsraum einmündet. Vor dem Einmündungsbereich ist ein zylindrischer Verteilungszapfen 6 vorgesehen, der im Kanal 3 angeordnet ist. Die Längsachse des Verteilungszapfens 6 liegt in der Symmetrieachse S des Kanals 3. Der Durchmesser des Verteilungszapfens 6 ist kleiner als der Innendurchmesser, so dass zwischen der Innenwand des Kanals 3 und der Mantelfläche des Verteilungszapfens 6 ein Zwischenraum verbleibt, durch welchen die Luft strömen kann. Durch den Strömungswiderstand des Verteilungszapfens 6 erfolgt in diesem Bereich eine Verwirbelung der Luftströmung.

In diesem Bereich mündet seitlich ein Zuführkanal 7 in den Kanal 3 ein. Dieser Zuführkanal 7 ist Bestandteil der Brennstoff-Zuführeinrichtung und dient zur Einspeisung des Brennstoffes. Der Zuführkanal 7 weist einen konstanten kreisförmigen Querschnitt auf und verläuft in horizontaler Richtung. Über den Zuführkanal 7 wird der Brennstoff mit Atmosphärendruck in den Kanal 3 eingeleitet.

Durch den Luftstrom im Kanal 3 wird der Brennstoff angesaugt und mit der Luft vermischt. Durch die Aufwirbelung des Luftstroms erfolgt bereits im Bereich des Verteilungszapfens 6 eine erhebliche Durchmischung der Luft mit dem Brennstoff.

Anschließend wird das von der Luft und dem Brennstoff gebildete Brennstoff-Luft-Gemisch in den Brennstoff-Aufbereitungsraum eingeführt. Der Brennstoff-Aufbereitungsraum ist rotationssymmetrisch zur Symmetrieachse S des Grundkörpers 2 ausgebildet und umfasst einen flächigen, auf einer Kegelmantelfläche verlaufenden Hohlraum 8 sowie einen an dessen Unterseite anschließenden ringförmigen Auffangraum 9.

Der Grundkörper 2 weist im Bereich des Hohlraumes 8 selbst die Form eines Kegelstumpfes auf, der sich nach unten kontinuierlich verbreitert und schließlich in einen zylindrischen Abschnitt des Grundkörpers 2 übergeht, in welchem der Auffangraum 9 angeordnet ist.

Der entlang der Kegelmantelfläche verlaufende Hohlraum 8 ist flächig ausgebildet und weist eine geringe, im Wesentlichen konstante Breite auf. Die Breite des Hohlraumes 8 ist im Wesentlichen an die Breite des Zwischenraumes zwischen der Innenwand des Kanals 3 und der Mantelfläche des Verteilungszapfens 6 angepasst.

Der Durchmesser des Kegelmantels, entlang dessen der Hohlraum 8 verläuft, vergrößert sich kontinuierlich zu seinem unteren Ende hin. Damit nimmt der Querschnitt des Hohlraums 8 von seinem oberen Ende zu seinem unteren Ende hin kontinuierlich zu. Dadurch wird das in dem Hohlraum 8 abwärts geführte Brennstoff-Luft-Gemisch entspannt. Gleichzeitig erfolgt in dem Hohlraum 8 eine erhebliche Verwirbelung des Brennstoff-Luft-Gemisch, wodurch dieses homogen vermischt wird und schließlich eine schaumförmige Konsistenz aufweist.

Zur Förderung der Durchmischung und Verwirbelung des Brennstoff-Luft-Gemisches weist der Brennstoff-Aufbereitungsraum rillenförmige Vertiefungen 10 auf, welche in den Hohlraum 8 einmünden. Wie aus Figur 1 ersichtlich sind in verschiedenen Höhenlagen mehrere Vertiefungen 10 vorgesehen, die an den Innenseiten des Hohlraumes 8 einmünden.

Die rillenförmigen Vertiefungen 10 verlaufen jeweils in einer horizontalen Ebene entlang einer Kreisbahn und weisen einen in Umfangsrichtung konstanten Querschnitt auf. Die Vertiefungen 10 laufen somit jeweils über den gesamten Umfang des Hohlraumes 8 in einer vorgegebenen Höhenlinie um.

Das im Hohlraum 8 abwärts geführte Brennstoff-Luft-Gemisch dringt in die einzelnen Vertiefungen 10 ein und wird dort aufgewirbelt. Diese Verwirbelung führt zu einer homogenen Durchmischung der Luft mit dem Brennstoff.

Nach dem das Brennstoff-Luft-Gemisch den Hohlraum 8 mit den Vertiefungen 10 passiert hat, mündet dieses in den ringförmigen Auffangraum 9 ein. Die Breite des Auffangraumes 9 ist im vorliegenden Beispiel erheblich größer als die Breite des Hohlraumes 8, so dass das Brennstoff-Luft-Gemisch die dem Übergang vom Hohlraum 8 zum Auffangraum 9 entspannt wird. Die Breite des Auffangraumes 9 kann prinzipiell auch kleiner ausgebildet sein und in der Größenordnung der Breite des Hohlraumes 8 sein.

Im Bereich des Brennstoff-Aufbereitungsraums sind mehrere Magnete 11 vorgesehen, welche das Brennstoff-Luft-Gemisch in dem Brennstoff-Aufbereitungsraum mit Magnetfeldern beaufschlagen. Die Magnetfelder bewirken eine teilweise Ausrichtung der Brennstoffmoleküle im Magnetfeld.

Wie aus Figur 1 ersichtlich grenzen die Magnete 11 an die Innenseiten des Hohlraumes 8 und des Auffangraumes 9 an.

Zudem ist im Zentrum des Grundkörpers 2 ein Schwingungselement 12 vorgesehen. Die mit dem Schwingungselement 12 erzeugten mechanischen Schwingungen fördern die Durchmischung und Verwirbelung des Brennstoff-Luft-Gemisches.

An der Unterseite des Auffangraumes 9 mündet ein Verbindungskanal 13 aus, welcher in einen Austrittskanal 14 einmündet. Der Verbindungskanal 13 und der Austrittskanal 14 sind als Bohrungen in den Grundkörper 2 eingearbeitet und weisen jeweils eine hohlzylindrische Form auf.

Der Verbindungskanal 13 verläuft in vertikaler Richtung und mündet an der Oberseite des Austrittskanals 14 ein. Der Austrittskanal 14 verläuft im Bodenbereich des Grundkörpers 2 in horizontaler Richtung und mündet an einer Austrittsöffnung 15 aus.

Das Brennstoff-Luft-Gemisch wird über den Verbindungskanal 13 in den Austrittskanal 14 geleitet. Von dort wird das Brennstoff-Luft-Gemisch über die Austrittsöffnung 15 dem nachgeordneten Verbrennungsmotor oder der nachgeordneten Feuerungseinheit zugeführt.

Anstelle einer horizontalen Führung kann der Austrittskanal 14 von der Einmündung des Verbindungskanals 13 bis zur Austrittsöffnung 15 leicht abwärts laufen. Durch das so ausgebildete Gefälle wird die Zufuhr des Brennstoff-Luft-Gemisches zu der nachgeordneten Einheit gefördert.

In dem Austrittskanal 14 ist eine Heizpatrone 16 zur Aufheizung des Brennstoff-Luft-Gemisches geführt. Die Heizpatrone 16 ist im Wesentlichen zylindrisch ausgebildet, wobei deren Durchmesser kleiner ist als der Innendurchmesser des Austrittskanals 14. Die Symmetrieachse S der Heizpatrone 16 fällt dabei mit der Symmetrieachse S des Austrittskanals 14 zusammen.

Das Brennstoff-Luft-Gemisch ist in dem Zwischenraum zwischen der Mantelfläche der Heizpatrone 16 und der Innenwand der Bohrung geführt.

Mittels der Heizpatrone 16 wird das Brennstoff-Luft-Gemisch auf eine geeignete Endtemperatur aufgeheizt.

Um auch im Bereich des Austrittskanals 14 eine Verwirbelung des Brennstoff-Luft-Gemisches zu erhalten, ist die Mantelfläche der Heizpatrone 16 mit einer Spirale, vorzugsweise einer Drahtspirale 17, umwickelt.

### Bezugszeichenliste

- (1): Vorrichtung
- (2): Grundkörper
- (3): Kanal
- (4): Schieber
- (5): Führungskanal
- (6): Verteilungszapfen
- (7): Zuführkanal
- (8): Hohlraum
- (9): Auffangraum
- (10): Vertiefung
- (11): Magnet
- (12): Schwingungselement
- (13): Verbindungskanal
- (14): Austrittskanal
- (15): Austrittsöffnung
- (16): Heizpatrone
- (17): Drahtspirale

- S: Symmetrieachse

## Patentansprüche

1. Vorrichtung zur Aufbereitung von Brennstoffen mit einer Brennstoff-Zuführeinrichtung zur Einleitung von Brennstoff in wenigstens einen Brennstoff-Aufbereitungsraum und mit einer Luftzuführeinrichtung zum Einleiten von Luft in den Brennstoff-Aufbereitungsraum, in welchem Mittel zur Erzeugung eines Brennstoff-Luft-Gemisches vorgesehen sind, und einem Austrittskanal zur Zuführung des Brennstoff-Luft-Gemisches zu einem Verbrennungsmotor und/oder einer Feuerungseinheit.

2. Vorrichtung zur Aufbereitung von Brennstoffen nach Anspruch 1, **dadurch gekennzeichnet, dass** in dem Austrittskanal (14) Mittel zum Aufheizen des Brennstoff-Luft-Gemisches vorgesehen sind.

3. Vorrichtung zur Aufbereitung von Brennstoffen nach einem der Ansprüche 1 oder 2, **dadurch gekennzeichnet, dass** die Luftzuführeinrichtung einen in vertikaler Richtung verlaufenden, hohlzylindrischen Kanal (3) aufweist, dessen unteres Ende in den Brennstoff-Aufbereitungsraum einmündet und über dessen oberes Ende Luft mit einem vorgegebenen Luftdruck eingeleitet wird.

4. Vorrichtung zur Aufbereitung von Brennstoffen nach Anspruch 3, **dadurch gekennzeichnet, dass** in dem Kanal (3) ein Ventil zur Dosierung der Luftzufuhr vorgesehen ist.

5. Vorrichtung zur Aufbereitung von Brennstoffen nach Anspruch 3, **dadurch gekennzeichnet, dass** in dem Kanal (3) ein Schieber (4) zur Dosierung der Luftzufuhr vorgesehen ist.

6. Vorrichtung zur Aufbereitung von Brennstoffen nach Anspruch 5, **dadurch gekennzeichnet, dass** der Schieber (4) in einem Führungskanal (5) geführt ist, welcher in horizontaler Richtung verlaufend den Kanal (3) durchsetzt.

7. Vorrichtung zur Aufbereitung von Brennstoffen nach einem der Ansprüche 3 - 6, **dadurch gekennzeichnet, dass** die Brennstoff-Zuführeinrichtung einen Zuführkanal (7) aufweist, welcher in den Kanal (3) der Luftzuführeinrichtung einmündet, wobei über den Zuführkanal (7) Brennstoff in den Kanal (3) eingeleitet und der Luft beigemischt wird.

8. Vorrichtung zur Aufbereitung von Brennstoffen nach Anspruch 7, **dadurch gekennzeichnet, dass** die Einmündung des Zuführkanals (7) in den Kanal (3) in Strömungsrichtung der Luft dem Schieber (4) nachgeordnet ist.

9. Vorrichtung zur Aufbereitung von Brennstoffen nach Anspruch 8, **dadurch gekennzeichnet, dass** in dem Kanal (3) im Bereich der Einmündung des Zuführkanals (7) als Querschnittsverengung des Kanals (3) ein Verteilungszapfen (6) angeordnet ist.

10. Vorrichtung zur Aufbereitung von Brennstoffen nach Anspruch 9, **dadurch gekennzeichnet, dass** der Verteilungszapfen (6) zylinderförmig ausgebildet ist, wobei die Symmetrieachse (S) des Zylinders mit der Symmetrieachse (S) des Kanals (3) zusammenfällt.

11. Vorrichtung zur Aufbereitung von Brennstoffen nach einem der Ansprüche 9 oder 10, **dadurch gekennzeichnet, dass** der Verteilungszapfen (6) im Bereich der Einmündung des Kanals (3) in den Brennstoff-Aufbereitungsraum liegt.

12. Vorrichtung zur Aufbereitung von Brennstoffen nach Anspruch 11, **dadurch gekennzeichnet, dass** der Brennstoff-Aufbereitungsraum rotationssymmetrisch bezüglich der in vertikaler Richtung verlaufenden Symmetrieachse (S) des Kanals (3) ausgebildet ist.

13. Vorrichtung zur Aufbereitung von Brennstoffen nach Anspruch 12, **dadurch gekennzeichnet, dass** der Brennstoff-Aufbereitungsraum einen flächigen, auf einer Kegelmantelfläche verlaufenden Hohlraum (8) aufweist, wobei die Spitze der Kegelmantelfläche an den Kanal (3) anschließt.

14. Vorrichtung zur Aufbereitung von Brennstoffen nach Anspruch 13, **dadurch gekennzeichnet, dass** die Breite des Hohlraumes (8) an die Breite des zwischen dem Verteilungszapfen (6) und der Innenwand des Kanals (3) verbleibenden Zwischenraumes angepasst ist.

15. Vorrichtung zur Aufbereitung von Brennstoffen nach Anspruch 14, **dadurch gekennzeichnet, dass** die Breite des Hohlraumes (8) im Wesentlichen konstant ist.

16. Vorrichtung zur Aufbereitung von Brennstoffen nach einem der Ansprüche 13 - 15, **dadurch gekennzeichnet, dass** der Brennstoff-Aufbereitungsraum rillenförmige Vertiefungen (10) aufweist, welche in den Hohlraum (8) einmünden.

17. Vorrichtung zur Aufbereitung von Brennstoffen nach Anspruch 16, **dadurch gekennzeichnet, dass** die Vertiefungen (10) in verschiedenen Höhenlagen in horizontaler Richtung entlang des gesamten Umfanges des Hohlraumes (8) umlaufen.

18. Vorrichtung zur Aufbereitung von Brennstoffen nach einem der Ansprüche 13 - 17, **dadurch gekennzeichnet, dass** der Brennstoff-Aufbereitungsraum einen ringförmigen Auffangraum (9) aufweist, welcher an die Unterseite des Hohlraumes (8) anschließt.

19. Vorrichtung zur Aufbereitung von Brennstoffen nach Anspruch 18, **dadurch gekennzeichnet, dass** die Breite des Hohlraumes (8) kleiner ist als die Breite des Auffangraumes (9).

20. Vorrichtung zur Aufbereitung von Brennstoffen nach einem der Ansprüche 13 - 19, **dadurch gekennzeichnet, dass** das Brennstoff-Luft-Gemisch im Bereich des Hohlraumes (8) mit Magnetfeldern und/oder mechanischen Schwingungen beaufschlagt wird.

21. Vorrichtung zur Aufbereitung von Brennstoffen nach einem der Ansprüche 18 - 20, **dadurch gekennzeichnet, dass** an der Unterseite des Auffangraumes (9) wenigstens ein Verbindungskanal (13) ausmündet, welcher in den Austrittskanal (14) einmündet.

22. Vorrichtung zur Aufbereitung von Brennstoffen nach Anspruch 21, **dadurch gekennzeichnet, dass** der Verbindungskanal (13) in vertikaler Richtung verläuft.

23. Vorrichtung zur Aufbereitung von Brennstoffen nach einem der Ansprüche 21 oder 22, **dadurch gekennzeichnet, dass** der Austrittskanal (14) in horizontaler Richtung verläuft.

24. Vorrichtung zur Aufbereitung von Brennstoffen nach Anspruch 23, **dadurch gekennzeichnet, dass** in den Austrittskanal (14) eine Heizpatrone (16) eingeführt ist, welche die Mittel zur Aulheizung des Brennstoff-Luft-Gemisches bildet.

25. Vorrichtung zur Aufbereitung von Brennstoffen nach Anspruch 24, **dadurch gekennzeichnet, dass** der Austrittskanal (14) hohlzylindrisch ausgebildet ist, dass die Heizpatrone (16) zylindrisch ausgebildet ist, wobei deren Symmetrieachse (S) koaxial zur Symmetrieachse (S) des Austrittskanals (14) verläuft, und dass das Brennstoff-Luft-Gemisch im Zwischenraum zwischen der Mantelfläche der Heizpatrone (16) und der Innenwand des Austrittskanals (14) geführt ist.

26. Vorrichtung zur Aufbereitung von Brennstoffen nach Anspruch 25, **dadurch gekennzeichnet, dass** die Heizpatrone (16) mit einer Spirale umwickelt ist.

27. Vorrichtung zur Aufbereitung von Brennstoffen nach einem der Ansprüche 1 - 26, **dadurch gekennzeichnet, dass** der Verbrennungsmotor von einem Benzinmotor, einem Dieselmotor oder einem Leichtölmotor gebildet ist.

28. Vorrichtung zur Aufbereitung von Brennstoffen nach einem der Ansprüche 1 - 27, **dadurch gekennzeichnet, dass** die Feuerungseinheit von einer Ölfeuerungsanlage gebildet ist.
